# EUROPÄISCHE PATENTSCHRIFT

(11) **EP 3 759 783 B1**
(45) Veröffentlichungstag und Bekanntmachung des Hinweises auf die Patenterteilung: **16.09.2026**
(21) Anmeldenummer: 19706997.4
(22) Anmeldetag: 22.02.2019
(51) Int. Cl.: H02J 3/14, H02J 3/26, H02J 3/28, H02J 3/36

(54) **VORRICHTUNG ZUR VERBINDUNG EINES TEILNETZES MIT EINEM WECHSELSPANNUNGSNETZ UND VERFAHREN ZUR REGELUNG EINER ELEKTRISCHEN LEISTUNG**
DEVICE FOR CONNECTING A SUB-NETWORK TO AN ALTERNATING VOLTAGE NETWORK AND METHOD FOR CONTROLLING AN ELECTRICAL POWER
DISPOSITIF DE CONNEXION D'UN RÉSEAU PARTIEL À UN RÉSEAU À TENSION ALTERNATIVE ET PROCÉDÉ DE COMMANDE D'UNE SORTIE ÉLECTRIQUE

(30) Priorität: 28.02.2018 DE 102018104604
(43) Veröffentlichungstag der Anmeldung: 06.01.2021
(73) Patentinhaber: SMA Solar Technology AG, 34266 Niestetal (DE)
(72) Erfinder: ALLERT, Claus, 34260 Kaufungen (DE); BUENEMANN, Mathias, 34125 Kassel (DE); GROENE, Matthias, 34266 Niestetal (DE); UNRU, Alexander, 34225 Baunatal (DE)
(86) Internationale Anmeldenummer: PCT/EP2019/054450
(87) Internationale Veröffentlichungsnummer: WO 2019/166342

(56) Entgegenhaltungen:
- EP-A1- 2 348 597
- DE-A1- 102011 078 047
- DE-A1- 102012 212 108
- DE-A1- 102015 105 152
- DE-A1- 102016 110 716
- DE-A1- 102017 108 606

## Beschreibung

### TECHNISCHES GEBIET DER ERFINDUNG

Die Erfindung betrifft eine Vorrichtung zur Verbindung eines Teilnetzes mit einem Wechselspannungsnetz, sowie ein Verfahren zum Betrieb eines Teilnetzes.

### STAND DER TECHNIK

Ein Wechselspannungsnetz zum Transport und zur Verteilung elektrischer Leistung kann in verschiedene Netzabschnitte unterteilt sein. Zusätzlich kann eine Unterteilung in Netzebenen vorliegen, wobei verschiedene Netzebenen in der Regel unterschiedliche Netzspannungen aufweisen und über Transformatoren miteinander verbundenen werden. Innerhalb einer solchen Netzebene werden Netzabschnitte gebildet, indem Teilnetze, beispielsweise Haushalte, Industriebetriebe oder Ortschaften, über Anschlusspunkte an das Wechselspannungsnetz angeschlossen werden, wobei die Netzspannung beidseits dieser Anschlusspunkte im Wesentlichen identisch ist, d.h. diese Anschlusspunkte umfassen keine Spannungsübersetzung zwischen dem Wechselspannungsnetz am Ort des Anschlusspunktes und dem über den Anschlusspunkt an das Wechselspannungsnetz angeschlossenen Teilnetz.

Innerhalb eines Netzabschnittes, der als Teilnetz an ein übergeordnetes Wechselspannungsnetz angeschlossen ist, können verschiedene elektrische Energie erzeugende und/oder verbrauchende Einheiten angeordnet sein, insbesondere Generatoren, Speicher und Verbraucher. Insbesondere kann das Teilnetz eine Photovoltaikanlage umfassen, die über einen ein- oder mehrphasigen Wechselrichter elektrische Leistung in das Teilnetz einspeist, sowie Verbraucher versorgen, die elektrische Leistung über einen ein- oder mehrphasigen Anschluss aus dem Teilnetz beziehen. Weiterhin kann ein elektrischer Speicher, insbesondere eine Batterie über einen ein- oder mehrphasigen Batteriewandler elektrische Leistung wahlweise aus dem Teilnetz beziehen oder in das Teilnetz einspeisen.

Herkömmliche Anschlusspunkte sind zur Übertragung einer begrenzten elektrischen Leistung aus dem Wechselspannungsnetz in das Teilnetz ausgelegt. Aufgrund zunehmender dezentraler Energieerzeugung einerseits, die insbesondere bei regenerativen Energieerzeugern eine hohe und zeitlich volatile elektrische Leistung in dem oder in der Nähe des Teilnetzes hervorruft, und zunehmender Verbreitung von Verbrauchern mit hohem und ebenfalls zeitlich volatilem Leistungsbedarf andererseits, insbesondere im Bereich der Elektromobilität, kann die Belastung eines Anschlusspunktes und auch des Wechselspannungsnetzes insgesamt eine kritische Größenordnung erreichen. Beispielsweise kann abends oder nachts eine Situation eintreten, in der innerhalb eines Teilnetzes ein Elektrofahrzeug oder mehrere Elektrofahrzeuge mit hoher Leistung aufgeladen werden sollen, während gleichzeitig eine in dem oder in der Nähe des Teilnetzes angeordnete Photovoltaikanlage keine elektrische Leistung produziert, so dass eine sehr hohe Leistung durch das übergeordnete Wechselspannungsnetz zur Verfügung gestellt und über den Anschlusspunkt in das Teilnetz gespeist werden muss. Dadurch werden der Anschlusspunkt und auch das Wechselspannungsnetz stark belastet und es besteht die Gefahr der Überlastung des Anschlusspunktes oder sogar des Wechselspannungsnetzes insgesamt. Darüber hinaus können Schaltvorgänge innerhalb eines Teilnetzes Lastspitzen hervorrufen, die die Stabilität des Anschlusspunktes bzw. des Wechselspannungsnetzes gefährden.

Bisherige Lösungsansätze hierzu umfassen beispielsweise einen zeitlich gestaffelten Betrieb oder eine Begrenzung der Ladeleistung für Elektrofahrzeuge zu bestimmten Zeiten und/oder in Abhängigkeit der entsprechenden lokalen Erzeugung sowie die Nutzung zwischengespeicherter Energie aus ggf. in dem Teilnetz angeordneten Energiespeichern. Eine pauschale Begrenzung der Ladeleistung wirkt sich jedoch als Komfortverlust aus, indem die Ladezeiten für das Elektrofahrzeug verlängert werden. Die Nutzung von Energiespeichern erhöht die Kosten und ist aufgrund inhärent begrenzter Reaktionsgeschwindigkeiten nur bedingt zur Vermeidung von Lastspitzen geeignet.

Eine Überlastung eines Anschlusspunktes, beispielsweise einer Sicherung in einem Netzanschlusspunkt, kann auch durch eine Stromregelung vermieden werden, bei der phasenaufgelöste Messwerte des Stromes am Anschlusspunkt als Regelgröße dienen. Auch eine solche Stromregelung weist eine begrenzte Dynamik auf und kann nur bedingt auf eine nicht kontrollierbare und mitunter sehr sprunghafte Grundlast im Teilnetz reagieren. Darüber hinaus wirkt eine herkömmliche Stromregelung unabhängig auf die einzelnen Phasen eines Teilnetzes und kann keine phasenübergreifenden Randbedingungen handhaben, wie sie beispielsweise regelmäßig von Elektrofahrzeugen in Form einer zur Ladung notwendigen minimalen Gesamtleistung vorgegeben werden. Zudem ist in der Regel nicht bekannt, an wie viele bzw. an welche Phasen eines Teilnetzes welche Verbraucher konkret angeschlossen sind, wobei auch mehrphasig angeschlossene Verbraucher nicht zwingend symmetrische Ströme aus den Phasen des Teilnetzes beziehen und eine Zuordnung der Phasen eines mehrphasigen Verbrauchers zu den Phasen des Teilnetzes regelmäßig unbekannt ist. Daher kann eine phasenspezifisch arbeitende Stromregelung beispielsweise Schieflasten nicht zuverlässig vermeiden bzw. begrenzen, selbst wenn einem mehrphasig angeschlossenen Verbraucher, insbesondere einem Elektrofahrzeug vorgegeben werden kann, wie viel Strom maximal pro Phase bezogen werden darf.

Aus der DE 10 2016 110 716 A1 ist ein Verfahren zur Steuerung einer Entladeleistung einer Speichereinheit offenbart, das zum Ziel hat, eine von einem Energieversorgungsnetz über einen Netzanschlusspunkt eines Systems bezogene elektrische Energie auf einen Zielwert zu begrenzen, wobei die über den Netzanschlusspunkt bezogene Leistung gemessen und die Entladeleistung in Abhängigkeit von der bereits bezogenen Energie und einem Zielwert für die vom System zu beziehende Energie gesteuert wird. Eine entsprechende Vorrichtung weist eine Speichereinheit, eine Steuerungseinheit und ggf. eine lokale Energieerzeugungsanlage auf.

Aus der EP 2 348 597 A1 ist ein Verfahren zur Angleichung von Teilleistungen auf mehreren Außenleitern eines mehrphasigen Netzanschlusspunktes bekannt, bei dem Unterschiede zwischen den Teilleistungen durch Einspeisung unterschiedlicher Teilleistungen in die einzelnen Außenleiter mittels eines Wechselrichters reduziert werden. Eine entsprechende Vorrichtung umfasst einen mehrphasigen Wechselrichter sowie Messeinrichtungen und eine Regeleinrichtung, die den mehrphasigen Wechselrichter derart ansteuert, dass er unterschiedlich hohe Teilleistungen in die einzelnen Außenleitern einspeist.

Aus der DE 10 2017 108 606 A1 ist ein Verfahren zum Betrieb einer Energieerzeugungsanlage zur Einspeisung elektrischer Leistung über einen Netzanschlusspunkt in ein Wechselspannungsnetz bekannt, bei dem die Einspeiseleistung anhand von Kennlinien in Abhängigkeit von elektrischen Parametern des Wechselspannungsnetzes und einem Vorgabewert für die Einspeiseleistung eingestellt wird.

Aus der DE 10 2015 105 152 A1 ist eine Vorrichtung zum Verringern einer Schieflast in einem dreiphasigen Verteilungsnetz bekannt, bei dem eine Zuschalteinrichtung in Abhängigkeit der Phasenspannungen eine Last und/oder einen Erzeuger auf wenigstens eine Phase des Verteilungsnetzes zuschalten kann.

Aus der DE 10 2012 212 108 A1 ist eine Vorrichtung zum versorgungsnetzunabhängigen Versorgen eines Verbrauchers mit elektrischer Leistung eines lokalen Erzeugers bekannt, die mittels einer Prozessoreinheit anhand des voraussichtlichen Leistungsbedarfs des Verbrauchers und der voraussichtlichen Leistungsfähigkeit des Erzeugers Leistungsvorgabewerte für den Verbraucher und/oder den Erzeuger festlegt, um eine ausgeglichene Leistungsbilanz zwischen Erzeuger und Verbraucher herzustellen. In einem entsprechenden Verfahren wird der Leistungsfluss zwischen Erzeuger und Verbraucher mittels Steuermitteln für den Leistungsfluss gemäß den Leistungsvorgabewerten eingestellt.

Aus der DE 10 2011 078047 A1 ist eine Vorrichtung zur Steuerung der Belastung der Phasen eines dreiphasigen Energienetzes bekannt, die über einen ersten Anschluss mit dem dreiphasigen Energienetz verbunden ist und einen zweiten Anschluss über ein Schaltelement selektiv mit einem der Außenleiter des dreiphasigen Energienetzes verbindet, um einen Leistungsaustausch zwischen einer am zweiten Anschluss angeschlossenen einphasigen Komponente und einem der Außenleiter des dreiphasigen Energienetzes zu ermöglichen.

### AUFGABE DER ERFINDUNG

Der Erfindung liegt die Aufgabe zugrunde, eine Vorrichtung zur Verbindung eines Teilnetzes mit einem Wechselspannungsnetz und ein Verfahren zum Betrieb eines Teilnetzes aufzuzeigen, die gewährleisten, dass ein Anschlusspunkt des Teilnetzes an das Wechselspannungsnetz innerhalb vorgegebener Spezifikationen betrieben und insbesondere nicht überlastet wird sowie keine unzulässige Schieflast für das Wechselspannungsnetz darstellt.

### LÖSUNG

Die Aufgabe wird durch eine Vorrichtung zur Verbindung eines Teilnetzes mit einem Wechselspannungsnetz mit den Merkmalen des Patentanspruchs 1 und ein Verfahren zum Betrieb eines Netzabschnittes mit den Merkmalen des Patentanspruchs 4 gelöst. Bevorzugte Ausführungsformen sind in den abhängigen Patentansprüchen definiert.

### BESCHREIBUNG DER ERFINDUNG

In einem Verfahren zur Regelung einer elektrischen Leistung, die über einen Anschlusspunkt in ein oder aus einem elektrischen Teilnetz fließt, weist das Teilnetz mindestens eine elektrische Last auf, wobei die elektrische Last über eine Kommunikationsverbindung mit einer Steuerungsvorrichtung verbunden ist. In dem Verfahren wird die über den Anschlusspunkt fließende elektrische Leistung gemessen und eine maximale Leistungsaufnahme der elektrischen Last durch die Steuerungsvorrichtung in Abhängigkeit von der über den Anschlusspunkt fließenden elektrischen Leistung vorgegeben.

Durch das Vorgeben der maximalen Leistungsaufnahme der elektrischen Last durch die Steuerungsvorrichtung kann gewährleistet werden, dass der Anschlusspunkt des Teilnetzes an das Wechselspannungsnetz innerhalb vorgegebener Spezifikationen betrieben wird, ohne dass der elektrischen Last eine konkrete Leistungsaufnahme vorgeschrieben wird. Insbesondere kann die elektrische Last somit bei Bedarf eine variable elektrische Leistung beziehen, solange ihre Leistungsaufnahme geringer als die maximale Leistungsaufnahme ist. Im Rahmen des Verfahrens kann weiterhin eine Leistungsabgabe eines in dem Teilnetz angeordneten Energiespeichers und/oder einer in dem Teilnetz angeordneten Energieerzeugungseinheit durch die Steuerungsvorrichtung in Abhängigkeit von der über den Anschlusspunkt fließenden elektrischen Leistung vorgegeben werden. Durch eine Einspeisung elektrischer Leistung in das Teilnetz durch einen Energiespeicher bzw. eine Energieerzeugungseinheit kann die aus dem Wechselspannungsnetz über den Anschlusspunkt in das Teilnetz fließende elektrische Leistung verringert werden, ohne die Leistungsaufnahme der elektrischen Last verringern zu müssen.

Alternativ oder zusätzlich kann die maximale Leistungsaufnahme der elektrischen Last durch die Steuerungsvorrichtung abgesenkt werden, insbesondere wenn die über den Anschlusspunkt in das Teilnetz fließende elektrische Leistung einen vorgebbaren Grenzwert überschreitet. Dies ist insbesondere dann vorteilhaft, wenn innerhalb des Teilnetzes neben der kommunikativ mit der Steuerungsvorrichtung verbundenen elektrischen Last weitere elektrische Lasten vorhanden sind, deren Verhalten nicht direkt beeinflussbar ist.

Dabei kann eine maximale Leistungsaufnahme von null vorgegeben werden, wenn die über den Anschlusspunkt in das Teilnetz fließende elektrische Leistung den vorgebbaren Grenzwert überschreitet. Durch einen Vorgabewerte von null für die maximale Leistungsaufnahme wird die elektrische Last zumindest kurzzeitig abgeschaltet, so dass lediglich eine zur Versorgung der nicht beeinflussbaren Lasten notwendige elektrische Leistung über den Anschlusspunkt in das Teilnetz fließt, gegebenenfalls abzüglich der innerhalb des Teilnetzes durch einen Energiespeicher und/oder eine Energieerzeugungseinheit direkt eingespeisten Leistung. Insbesondere im Falle einer plötzlich auftretenden Überschreitung des vorgebbaren Grenzwertes für die über den Anschlusspunkt fließende elektrische Leistung, die beispielsweise durch das Einschalten einer nicht beeinflussbaren Last auftreten kann, wird somit verhindert, dass die in dem Teilnetz angeordneten Lasten eine Gesamtleistung aus dem Wechselspannungsnetz erfordern, die nicht über den Anschlusspunkt transferiert werden kann.

Im Anschluss an ein derartiges Abschalten der kommunikativ mit der Steuerungsvorrichtung verbundenen Last kann die vorgegebene maximale Leistungsaufnahme schrittweise wieder erhöht werden, wobei die über den Anschlusspunkt in das Teilnetz fließende elektrische Leistung nach jedem Erhöhungsschritt der vorgegebenen maximalen Leistungsaufnahme mit dem vorgebbaren Grenzwert verglichen wird und die vorgegebene maximale Leistungsaufnahme nur dann weiter erhöht wird, wenn die über den Anschlusspunkt in das Teilnetz fließende elektrische Leistung den vorgebbaren Grenzwert weiterhin unterschreitet. Dadurch können alle elektrische Lasten in dem Teilnetz, insbesondere die nicht beeinflussbaren Lasten weiterhin betrieben werden, ohne den Anschlusspunkt zu überlasten, wobei die kommunikativ mit der Steuerungsvorrichtung verbundenen Last eine zwar begrenzte aber für ihren Betrieb in der Regel ausreichende elektrische Leistung beziehen darf.

In einer Ausführungsform des Verfahrens kann das Messen der über den Anschlusspunkt fließenden elektrischen Leistung ein Messen von über einzelne Phasen des Anschlusspunktes fließenden Strömen umfassen. Dies ist insbesondere vorteilhaft, wenn es sich bei dem Teilnetz und/oder dem übergeordneten Wechselspannungsnetz um ein mehrphasiges, insbesondere um ein dreiphasiges Netz handelt. Besonders vorteilhaft ist das Messen der einzelnen Phasenströme, wenn die elektrischen Lasten in dem Teilnetz einphasig ausgeführt und an verschiedenen Phasen angeschlossen sind oder mehrphasig ausgeführt und angeschlossen sind, jedoch eine Schieflast darstellen, indem sie den verschiedenen Phasen unterschiedliche Leistungen entnehmen. Insbesondere kann auch die kommunikativ mit der Steuerungsvorrichtung verbundene Last dreiphasig angeschlossen und schieflastfähig sein.

Die vorgegebene maximale Leistungsaufnahme kann insbesondere dann abgesenkt werden, wenn mindestens einer der über die einzelnen Phasen des Anschlusspunktes fließenden Ströme einen vorgebbaren Grenzwert überschreitet. Dies ist insbesondere vorteilhaft, wenn die einzelnen Phasen des Anschlusspunktes einzeln abgesichert sind, beispielsweise über Sicherungen oder Sicherungsautomaten. Darüber hinaus kann der kommunikativ mit der Steuerungsvorrichtung verbundenen elektrischen Last die maximale Leistungsaufnahme derart vorgegeben werden, dass für einzelne Phasen des Teilnetzes, aus denen diese elektrische Last elektrische Leistung aufnimmt, Maximalwerte für eine Stromaufnahme aus der jeweiligen Phase vorgegeben werden. Insbesondere kann dabei ein Maximalwert für eine Stromaufnahme aus einer Phase abgesenkt werden, wenn der am Anschlusspunkt über diese Phase fließende Strom einen vorgebbaren Grenzwert überschreitet, oder wenn eine Differenz dieses Stroms zu einem am Anschlusspunkt über eine andere Phase fließenden Strom einen vorgebbaren Grenzwert überschreitet, mithin also eine unzulässige Schieflast vorliegt. Damit ist es insbesondere möglich, eine etwaige durch einphasig angeschlossene nicht beeinflussbare Lasten hervorgerufene unzulässige Schieflast am Anschlusspunkt auszugleichen, indem die kommunikativ mit der Steuerungsvorrichtung verbundene elektrische Last ihrerseits asymmetrisch elektrische Leistung aus den einzelnen Phasen bezieht. Insbesondere kann dabei ein Betrag des Absenkens des Maximalwertes für die Stromaufnahme aus einer Phase des Teilnetzes proportional zu einem Betrag der Überschreitung des Grenzwertes für den über diese Phase des Anschlusspunktes fließenden Stromes sein.

In einer Ausführungsform des Verfahrens können die Maximalwerte für die Stromaufnahme für alle Phasen, aus denen die kommunikativ mit der Steuerungsvorrichtung verbundene elektrische Last elektrische Leistung aufnimmt, auf null gesetzt werden, wenn durch das Absenken von Maximalwerten für die Stromaufnahme, beispielsweise aufgrund einer unzulässigen Schieflast am Anschlusspunkt, eine maximale Leistungsaufnahme dieser elektrischen Last resultiert, die unterhalb eines vorgegebenen Minimalwertes für die Leistungsaufnahme dieser Last liegt. Derartige Minimalwerte für eine Leistungsaufnahme sind regelmäßig für bestimmte Lasten vorgegeben, beispielsweise für Elektrofahrzeuge, die eine minimale Ladeleistung benötigen.

Alternativ kann der Maximalwert für die Stromaufnahme aus einer ersten Phase erhöht werden, wenn der Maximalwert für die Stromaufnahme aus einer zweiten Phase abgesenkt wird und der Maximalwert für die Stromaufnahme aus der ersten Phase unterhalb des vorgebbaren Grenzwertes liegt. Damit kann die maximale Leistungsaufnahme der kommunikativ mit der Steuerungsvorrichtung verbundenen schieflastfähigen elektrischen Last konstant gehalten werden, selbst wenn die Gefahr einer Überlastung einer einzelnen Phase des Anschlusspunktes im Falle eines symmetrischen Betriebs dieser Last bestehen würde.

Eine Vorrichtung zur Verbindung eines mehrphasigen Teilnetzes, das eine Energieerzeugungsanlage und einen Energiespeicher aufweist, mit einem übergeordneten mehrphasigen Wechselspannungsnetz ist zur Übertragung von elektrischer Leistung zwischen dem Wechselspannungsnetz und dem Teilnetz eingerichtet und umfasst einen AC-AC-Umrichter, der einen Netzanschluss, zwei Wechselrichter-Brückenschaltungen mit einem dazwischengeschalteten Zwischenkreis und einen Teilnetzanschluss aufweist. Eine erfindungsgemäße Vorrichtung umfasst eine Steuerungsvorrichtung, die dazu eingerichtet ist, mittels geeigneter Ansteuerung der Wechselrichter-Brückenschaltungen die über die einzelnen Phasen des Teilnetzanschlusses fließenden elektrischen Leistungen in Abhängigkeit von Leistungswerten der Energieerzeugungsanlage und des Energiespeichers einzustellen.

Eine derartige Vorrichtung ist in der Lage, sowohl die elektrische Leistung einzustellen, die insgesamt zwischen dem Wechselspannungsnetz und dem Teilnetz übertragen wird, als auch Teilleistungen auf einzelnen Phasen des Teilnetzanschlusses von Teilleistungen auf einzelnen Phasen des Netzanschlusses zu entkoppeln. Insbesondere kann die Vorrichtung einen Anschlusspunkt des Teilnetzes an das Wechselspannungsnetz darstellen, der durch die erfindungsgemäße Ausgestaltung gesichert innerhalb vorgegebener Spezifikationen betrieben werden kann. Dabei kann die Steuerungsvorrichtung kommunikativ mit der Energieerzeugungsanlage und/oder dem Energiespeicher verbunden und dazu eingerichtet sein, die Leistungswerte der Energieerzeugungsanlage und/oder des Energiespeichers kommunikativ zu empfangen. Alternativ oder zusätzlich kann die Steuerungsvorrichtung weiterhin kommunikativ mit einer Netzleitstelle verbunden sein, insbesondere um Spezifikationen für den Betrieb des Anschlusspunktes aus Sicht eines Netzbetreibers vorzugeben. Zudem kann die Steuerungsvorrichtung dazu eingerichtet sein, mittels geeigneter Ansteuerung der Wechselrichter-Brückenschaltungen die über die einzelnen Phasen des Netzanschlusses fließenden elektrischen Leistungen in Abhängigkeit von kommunikativ übermittelten Vorgabewerten der Netzleitstelle einzustellen. Dies ermöglicht insbesondere die Einhaltung von Grenzwerten für die aus dem Wechselspannungsnetz entnommene elektrische Leistung sowie etwaiger Schieflastgrenzwerte.

In einer Ausführungsform kann die der AC-AC-Umrichter den Energiespeicher in einer baulichen Einheit umfassen, wobei die Vorrichtung dazu eingerichtet sein kann, mittels mindestens einer der Wechselrichter-Brückenschaltungen elektrische Leistung in den Energiespeicher einzuspeisen oder aus dem Energiespeicher zu entnehmen. Damit steht eine universell als Anschlusspunkt einsetzbare Vorrichtung zur Verfügung, die eine weitgehende Entkoppelung des Betriebs elektrischer Lasten innerhalb des Teilnetzes von der aus dem Wechselspannungsnetz entnommenen elektrischen Leistung ermöglicht. In einer Ausführungsform kann diese Vorrichtung dazu eingerichtet sein, innerhalb des Teilnetzes eine Wechselspannung mit vorgegebener Frequenz und Amplitude und einen entsprechenden Wechselstrom zum Betrieb von im Teilnetz angeordneten Lasten bereitzustellen.

In einem Verfahren zum Betrieb eines mehrphasigen Teilnetzes umfasst das Teilnetz eine Photovoltaikanlage und einen Energiespeicher und ist über einen AC-AC-Umrichter mit einem übergeordneten mehrphasigen Wechselspannungsnetz verbunden, wobei der AC-AC-Umrichter zur Übertragung elektrischer Leistung zwischen dem Wechselspannungsnetz und dem Teilnetz eingerichtet ist und einen Netzanschluss, zwei Wechselrichter-Brückenschaltungen mit einem dazwischengeschalteten Zwischenkreis und einen Teilnetzanschluss aufweist. Erfindungsgemäß werden die Wechselrichter-Brückenschaltungen derart angesteuert, dass die über die einzelnen Phasen des Teilnetzanschlusses des AC-AC-Umrichters fließenden elektrischen Leistungen in Abhängigkeit von Leistungswerten der Energieerzeugungsanlage und des Energiespeichers eingestellt werden.

In einer Ausführungsform können die Wechselrichter-Brückenschaltungen derart angesteuert werden, dass die über die einzelnen Phasen des Netzanschlusses des AC-AC-Umrichters fließenden elektrischen Leistungen derart eingestellt werden, dass eine maximale Differenz zwischen den über die einzelnen Phasen des Netzanschlusses des AC-AC-Umrichters fließenden elektrischen Leistungen unterhalb eines vorgebbaren Schieflastgrenzwertes liegt und insbesondere kleiner als eine maximale Differenz zwischen über die einzelnen Phasen des Teilnetzanschlusses des AC-AC-Umrichters fließenden elektrischen Leistungen und/oder minimal nahe null ist.

In einer Ausführungsform kann der Energiespeicher über einen bidirektionalen Wechselrichter mit dem Teilnetz verbunden sein und eine Wechselspannung mit vorgegebener Frequenz und Amplitude zum Betrieb von im Teilnetz angeordneten Lasten bereitstellen. Dabei kann die über den Teilnetzanschluss des AC-AC-Umrichters fließende elektrische Leistung in Abhängigkeit von der Abweichung der Frequenz im Teilnetz von einer vorgegebenen Referenzfrequenz eingestellt werden. Dadurch wird es ermöglicht, die elektrischen Eigenschaften des Teilnetzes durch den Wechselrichter des Energiespeichers zu bestimmen und so insbesondere eine Leistungsbilanz innerhalb des Teilnetzes bevorzugt durch den Energiespeicher auszugleichen, sowie einen Bedarf an zusätzlich aus dem Wechselspannungsnetz zu beziehender oder in das Wechselspannungsnetz einzuspeisender elektrischer Leistung anhand einer Änderung der Frequenz innerhalb des Teilnetzes an den AC-AC-Umrichter zu signalisieren, woraufhin der AC-AC-Umrichter die mit dem Wechselspannungsnetz ausgetauschte elektrische Leistung entsprechend anpassen kann.

In einer alternativen Ausführungsform kann der AC-AC-Umrichter den Energiespeicher in einer baulichen Einheit umfassen und mittels mindestens einer der Wechselrichter-Brückenschaltungen elektrische Leistung in den Energiespeicher einspeisen oder aus dem Energiespeicher entnehmen. Dabei ist es bevorzugt, dass der AC-AC-Umrichter an seinem Teilnetzanschluss eine Wechselspannung mit vorgegebener Frequenz und Amplitude und einen entsprechenden Wechselstrom zum Betrieb von im Teilnetz angeordneten Lasten bereitstellt. Dadurch wirkt der AC-AC-Umrichter als Netzbildner für das Teilnetz.

Die erfindungsgemäße Vorrichtung kann auch durch folgende Aspekte gekennzeichnet sein:
Der Anschlusspunkt kann als AC-AC-Wandler ausgeführt und so angeordnet sein, dass er Leistung aus dem Wechselspannungsnetz aufnehmen und in das Teilnetz abgeben kann. Dieser Leistungsaustausch kann auf beiden Seiten des Anschlusspunktes jeweils netzkonform erfolgen, d.h. in Richtung Wechselspannungsnetz insbesondere hinsichtlich normativ vorgegebener technischer Anschlussbedingungen (Blindleistung, Schieflast, Verhalten im Falle eines Netzfehlers usw.) und in Richtung des Teilnetzes insbesondere hinsichtlich von Grenzwerten für die bereitzustellende Frequenz und Spannungsamplitude.

Dabei kann der Wandler so ausgebildet sein, dass er in Richtung des Teilnetzes ein Inselnetz aufbaut und insbesondere den Transfer elektrischer Leistung in das Teilnetz an den Bedarf innerhalb des Teilnetzes anpasst. Diese Anpassung kann mit einer Signalisierung der Leistungsbilanz am Anschlusspunkt einhergehen, wobei diese Signalisierung vorzugsweise eine Beeinflussung der vom AC-AC-Wandler erzeugten Teilnetzfrequenz in Abhängigkeit von der Leistungsbilanz am Anschlusspunkt beinhalten kann.

Vorzugsweise kann durch den AC-AC-Wandler eine Kopplung zwischen einem mehrphasigen Netzanschluss und dem mehrphasigen Teilnetz hergestellt werden kann. Der Teilnetzanschluss des AC-AC-Wandlers kann dann den Anforderungen des Teilnetzes und der Netzanschluss des AC-AC-Wandlers den Anforderungen des Wechselspannungsnetzes entsprechen.

Solch ein AC-AC-Wandler kann typischerweise aus zwei Wechselrichter-Brückenschaltungen aufgebaut sein, die über einen Zwischenkreis verkoppelt werden, wobei zusätzlich eine galvanische Trennung vorgesehen sein kann. Über den AC-AC-Wandler kann das Wechselspannungsnetz vom Teilnetz entkoppelt werden, so dass Schalthandlungen im Teilnetz keine (direkten) Rückwirkungen auf das Wechselspannungsnetz haben. Dadurch kann das Teilnetz vom Netzanschluss an das Wechselspannungsnetz entkoppelt sein, ohne die Verbindung gänzlich zu kappen. Die Versorgung der angeschlossenen Lasten im Teilnetz kann vorzugsweise aus der im Teilnetz angeordneten Energieerzeugungsanlage und ggf. aus in einem Energiespeicher zwischengespeicherter Energie erfolgen. Zusätzlich kann eine (begrenzte) Leistung bei Bedarf aus dem Wechselspannungsnetz bezogen oder in das Wechselspannungsnetz eingespeist werden.

Das beschriebene Verfahren zur Regelung einer elektrischen Leistung, die über einen Anschlusspunkt in ein oder aus einem elektrischen Teilnetz fließt, kann durch die folgenden Aspekte weiter gekennzeichnet sein:
Das Verfahren kann eine Stromregelung umfassen, bei der phasenaufgelöste Stromwerte am Anschlusspunkt oder an einer Sicherung als Regelgröße dienen können. Durch die Regelung kann insbesondere eine Überlast auf einer Phase oder auf mehreren Phasen vermieden werden. Die Dynamik des Regelungsproblems kann dabei durch nicht kontrollierbare und mitunter sehr sprunghafte Lasten im Teilnetz deutlich erhöht sein.

Das Verfahren kann phasenübergreifenden Randbedingungen berücksichtigen und mit unvollständigen Informationen über elektrische Eigenschaften der Lasten im Teilnetz berücksichtigen. Regelungsziel kann neben einem Phasenstrom auch eine Begrenzung des Gesamtstromes auf einer Phase unterhalb eines Vorgabewertes sein. Entsprechende Stellwerte können Sollwertvorgaben an die Lasten sowie phasenspezifische Begrenzungen der Stromaufnahme von Lasten sein.

In einer Ausführungsform kann das Verfahren einen Satz an Stromvorgaben bzw. Stromgrenzwerten an eine Last im Teilnetz, beispielsweise ein Elektrofahrzeug ermitteln, wobei eine oder mehrere der folgenden Bedingungen berücksichtigt werden können:
(a) der Gesamtstrom je Phase soll kleiner sein als ein Maximalwert für diese Phase am Anschlusspunkt zum Wechselspannungsnetz;
(b) eine Stromvorgabe soll für jede beeinflussbare Last je Phase innerhalb eines vorgebbaren Bandes oder bei null liegen;
(c) für die Lasten, insbesondere für Elektrofahrzeuge, soll eine Summe der Stromvorgaben größer sein als ein vorgegebener minimaler Gesamtstrom für diese Last (oder gleich null).

Für Lasten, insbesondere Elektrofahrzeuge, bei denen unbekannt ist, an welche Phase oder Phasen sie angeschlossen sind, kann als worst case angenommen werden, dass das Auto der Stromvorgabe auf jeder Phase folgt. In dieser Form kann die Berechnung von Leistungsvorgaben mittels einer sogenannten Mixed-Integer Linear-Programmierung gelöst werden.

In einer weiteren Ausführungsform können mittels dreier voneinander unabhängige P-, PI- oder PID-Regler phasenaufgelöste Stellwerte für eine maximale Stromaufnahme für jede der beeinflussbaren Lasten im Teilnetz, insbesondere für Elektrofahrzeuge, innerhalb der von der jeweiligen Last vorgegebenen Bandbreite bestimmt werden. Ein Ziel kann dabei die Begrenzung einer dreiphasigen elektrischen Leistung am Anschlusspunkt oder einer Sicherung unterhalb eines Maximalwertes sein. An geeigneten Punkten in der Berechnung der phasenaufgelösten Stellwerte für eine Last können phasenübergreifende Randbedingungen, insbesondere ein minimaler Gesamtstrom für ein Elektrofahrzeug überprüft und ggf. mit geeigneten Heuristiken die Erfüllung der Randbedingungen sichergestellt werden. Weiterhin können an geeigneten Punkten der Berechnung Heuristiken verwendet werden, um das Regelziel trotz eines etwaigen Mangels an Information, beispielsweise hinsichtlich der Zuordnung einzelner Lasten zu verschiedenen Phasen des Teilnetzes, sicherzustellen. Dabei erweist es sich als besonders vorteilhaft, wenn ein Regelziel nicht als bestimmter Sollwerte am Anschlusspunkt vorgegeben werden muss, sondern lediglich die Einhaltung einer Obergrenze umfassen kann.

Ausführungsformen des Verfahrens können durch folgende Aspekte gekennzeichnet sein:
Eine Differenz zwischen einem zulässigem Maximalstrom, insbesondere je Phase, und einem Strom zur Versorgung nicht beeinflussbarer Lasten im Teilnetz (einem "Grundlaststrom") kann sinnvoll auf die beeinflussbaren Lasten verteilt werden, wobei oben genannte Randbedingungen berücksichtigt werden können. Dabei können Regelabweichungen, insbesondere Überschreitungen eines Grenzwertes für einen Strom am Anschlusspunkt des Teilnetzes, zu einem proportionalen Dekrement der den beeinflussbaren Lasten vorgegebenen Maximalwerte führen. Derartige Regelabweichung können bevorzugt mittels eines P-Reglers oder eines PID-Reglers verarbeitet werden.

Ein maximal zulässiger Gesamtstrom je Phase kann durch eine elektrische Sicherung vorgegeben sein. Unter Umständen auftretende nicht vermeidbare kurzzeitige Überschreitungen dieses maximal zulässigen Gesamtstroms, beispielsweise aufgrund unvorhersehbarer Fluktuationen einer oben genannten Grundlast, können für solche Sicherungen unkritisch sein. Eine vorteilhafte Ausführungsform kann daher umfassen, einen Offset von dem Regelziel abzuziehen, der proportional zu einer solchen kurzzeitigen Überschreitung ist. Wenn beispielsweise ein zulässiger Maximalstrom an einem Anschlusspunkt oder einer Sicherung 16 Ampere beträgt und eine Überschreitung von 1 Ampere gemessen wurde, kann ein im Rahmen der Regelung verwendeter Wert für den zulässigen Maximalstrom auf 15 Ampere reduziert werden. Dieser Offset kann über eine Zeitkonstante wieder verringert werden. Eine Beaufschlagung des Regelziels mit einem solchen Offset entspricht dann einem D-Anteil eines PID-Reglers entsprechen, wobei eine Reduzierung des Offsets mit der Zeit einem I-Anteil eines PID Reglers entsprechen kann.

In dem Verfahren können Energiespeicher berücksichtigt werden. Ein Energiespeicher, insbesondere eine Batterie kann durch gezielte Entladung dazu beitragen, dass der Stromgrenzwert am Anschlusspunkt eingehalten wird. Weiterhin kann ein Energiespeicher zur Erhöhung eines Eigenverbrauchs einer innerhalb des Teilnetzes erzeugten Energie einer Energieerzeugungsanlage dienen. Daher kann es vorteilhaft sein, eine zwischen Energiespeicher und Teilnetz ausgetauschte elektrische Leistung zunächst nicht zu berücksichtigen und insbesondere nicht zur oben genannten Grundlast zu zählen, dann Sollwerte für beeinflussbare Lasten im Sinne der oben geschilderten Reglung zu ermitteln und erst dann einen etwaigen Sollwert für eine zwischen Energiespeicher und Teilnetz auszutauschende elektrische Leistung zu ermitteln. So kann sichergestellt werden, dass der Energiespeicher nicht zugunsten einer unnötig hohen Leistungsaufnahme durch die Lasten entladen wird.

In dem Verfahren können schieflastfähige Leistungsquellen innerhalb des Teilnetzes berücksichtigt werden, insbesondere schieflastfähige Energiespeicher und/oder Energieerzeugungsanlagen, indem diese Leistungsquellen bevorzugt elektrische Leistung in solche Phasen einspeisen, an denen einphasige Lasten angeschlossen sind oder an denen die größte Grundlast anliegt. Ziel der Regelung kann es auch hier sein, möglichst viele Lasten innerhalb ihrer eigenen Randbedingungen zu betreiben, ohne einen Grenzwert für Ströme an einem Anschlusspunkt oder an einer Sicherung zu überschreiten.

### KURZBESCHREIBUNG DER FIGUREN

Im Folgenden wird die Erfindung anhand in den Figuren dargestellter Ausführungsbeispiele weiter erläutert und beschrieben.
- Fig. 1: zeigt ein über einen Anschlusspunkt an ein Wechselspannungsnetz angeschlossenes Teilnetz,
- Fig. 2: zeigt ein über einen AC-AC-Umrichter an ein Wechselspannungsnetz angeschlossenes Teilnetz,
- Fig. 3: zeigt eine weitere Ausführungsform eines über einen AC-AC-Umrichter an ein Wechselspannungsnetz angeschlossenes Teilnetz, und
- Fig. 4: zeigt ein Ablaufdiagramm eines erfindungsgemäßen Verfahrens.

### FIGURENBESCHREIBUNG

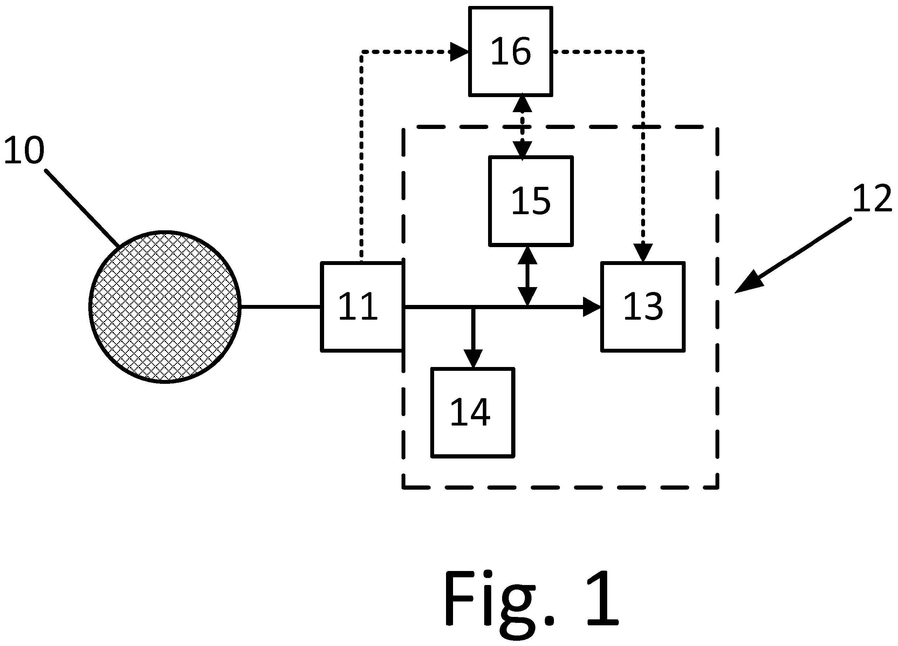

Fig. 1 zeigt ein Wechselspannungsnetz 10 und ein über einen Anschlusspunkt 11 an das Wechselspannungsnetz 10 angeschlossenes Teilnetz 12. In dem Teilnetz 12 ist eine elektrische Last 13 angeordnet, die über den Anschlusspunkt 11 mit elektrischer Leistung versorgt wird. Das Teilnetz 12 kann eine weitere Last 14 umfassen, die über den Anschlusspunkt 11 mit elektrischer Leistung versorgt werden kann, sowie einen Energiespeicher 15 aufweisen, beispielsweise eine Batterie, die elektrische Leistung bidirektional mit dem Teilnetz 12 austauschen und damit die Lasten 13, 14 alternativ oder zusätzlich versorgen kann; dazu kann der Energiespeicher 15 insbesondere einen bidirektionalen Wechselrichter umfassen.

Der Anschlusspunkt 11 kann einphasig oder mehrphasig ausgeführt sein und Messvorrichtungen zur Messung der über den Anschlusspunkt 11 fließenden elektrischen Leistung aufweisen, insbesondere Stromsensoren, die Ströme erfassen können, die über die einzelnen Phasen des Anschlusspunktes fließen. Eine Steuerungsvorrichtung 16 kann mit dem Anschlusspunkt über eine Kommunikationsverbindung verbunden sein, so dass die Steuerungsvorrichtung 16 die am Anschlusspunkt 11 erfassten Ströme bzw. die über den Anschlusspunkt 11 fließende elektrische Leistung empfangen und auswerten kann.

Die Steuerungsvorrichtung 16 kann über eine weitere Kommunikationsverbindung mit der Last 13 verbunden sein, so dass die Steuerungsvorrichtung 16 Steuerbefehle an die Last 13 übermitteln kann. Derartige Steuerbefehle können insbesondere Vorgabewerte für eine maximale Leistungsaufnahme der Last 13 umfassen, wobei diese Vorgabewerte die maximale Leistungsaufnahme der Last 13 in Form einer maximalen elektrischen Leistung P oder in Form von Maximalwerten für die durch die Last 13 aus den einzelnen Phasen des Teilnetzes 12 bezogenen Ströme vorgeben können.

Die Steuerungsvorrichtung 16 kann über eine weitere Kommunikationsverbindung mit dem Energiespeicher 15 verbunden sein. Diese Kommunikationsverbindung kann zur Übermittlung von Informationen über den Zustand des Energiespeichers 15 an die Steuerungsvorrichtung 16 verwendet werden, wobei diese Informationen insbesondere einen aktuellen Ladezustand des Energiespeichers 15 und eine aktuell zwischen Energiespeicher 15 und Teilnetz 12 ausgetauschte elektrische Leistung umfassen können. Weiterhin kann diese Kommunikationsverbindung verwendet werden, um Steuerbefehle von der Steuerungsvorrichtung 16 an den Energiespeicher 15 zu übermitteln, wobei die Steuerbefehle insbesondere Vorgabewerte für die vom Energiespeicher 15 in das Teilnetz 12 einzuspeisende oder aus dem Teilnetz 12 zu entnehmende elektrische Leistung umfassen können.

Die in **Fig. 1** gestrichelt dargestellten Kommunikationsverbindungen können unidirektional oder bidirektional ausgeführt sein, wobei es für das erfindungsgemäße Verfahren grundsätzlich ausreicht, die Kommunikationsverbindungen unidirektional auszuführen, so dass Messwerte vom Anschlusspunkt 11 zur Steuerungsvorrichtung 16 und Vorgabewerte von der Steuerungsvorrichtung 16 zur Last 13 übermittelt werden können.

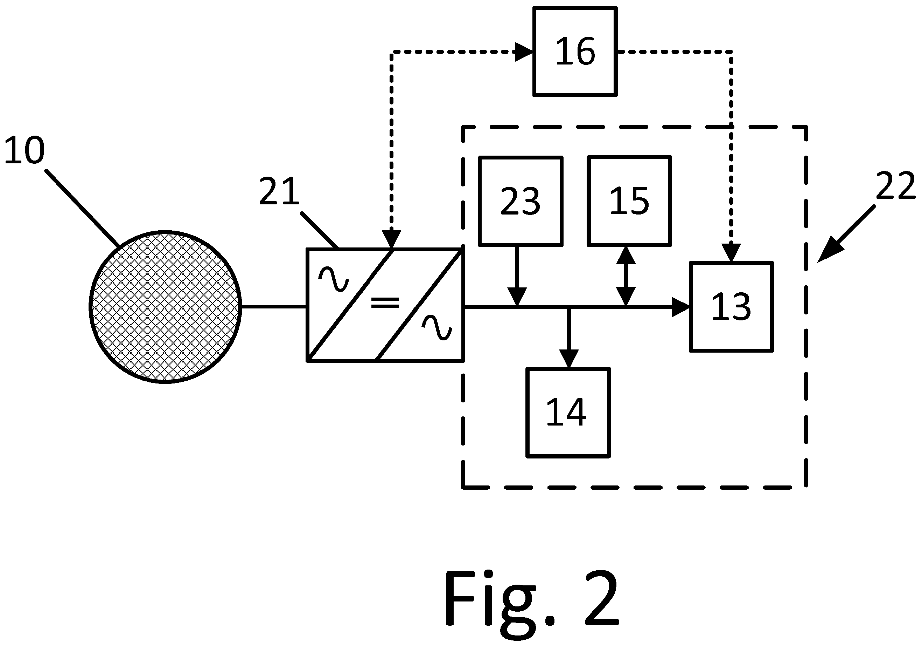

**Fig. 2** zeigt ein Teilnetz 22, das über einen AC-AC-Umrichter 21 als Anschlusspunkt an das Wechselspannungsnetz 10 angeschlossen ist. In dem Teilnetz 22 ist eine elektrische Last 13 angeordnet, die über den AC-AC-Umrichter 21 mit elektrischer Leistung versorgt werden kann. Das Teilnetz 12 kann eine weitere Last 14 umfassen, die über den Anschlusspunkt 11 mit elektrischer Leistung versorgt wird. Der AC-AC-Umrichter 21 kann eingangsseitig einphasig oder mehrphasig an das Wechselspannungsnetz 10 und ausgangsseitig einphasig oder mehrphasig an das Teilnetz 22 angeschlossen sein und über eine uni- oder bidirektionale Kommunikationsverbindung mit der Steuerungsvorrichtung 16 verbunden sein. Über diese Kommunikationsverbindung können Messwerte vom AC-AC-Umrichter 21 an die Steuerungsvorrichtung 16 übermittelt werden, wobei diese Messwerte insbesondere vom AC-AC-Umrichter 21 erfasste Messwerte der zwischen dem Wechselspannungsnetz 10 und dem Teilnetz 22 fließenden ein- oder mehrphasigen Ströme umfassen können. Weiterhin können über diese Kommunikationsverbindung Steuerbefehle von der Steuerungsvorrichtung 16 an den AC-AC-Umrichter 21 übermittelt werden, wobei diese Steuerbefehle insbesondere Vorgabewerte für den Betrieb des AC-AC-Umrichters 21 umfassen können. Anhand dieser Vorgabewerte kann beispielsweise bei einer gegebenen elektrischen Leistung, die in das Teilnetz 22 fließt, vorgegeben werden, aus welchen Phasen des Wechselspannungsnetzes 10 welche Ströme entnommen werden, wobei die Summe der dem Wechselspannungsnetz 10 insgesamt entnommenen Ströme der Summe der in das Teilnetz 22 fließenden Ströme entspricht. Mit anderen Worten kann der AC-AC-Umrichter 21 beispielsweise dem Wechselspannungsnetz 10 symmetrische Ströme entnehmen, d.h. gleiche Ströme auf allen Phasen, und asymmetrisch in das Teilnetz 22 einspeisen, d.h. unterschiedliche Ströme auf den Phasen des Teilnetzes 22 zur Verfügung stellen. Auch umgekehrt kann der AC-AC-Umrichter 21 dem Wechselspannungsnetz 10 asymmetrische Ströme entnehmen und symmetrische Ströme in das Teilnetz 22 einspeisen. Durch die Vorgabe entsprechender Steuerbefehle durch die Steuerungsvorrichtung 16 kann der AC-AC-Umrichter 21 somit bedarfsweise unterschiedlich betrieben werden, beispielsweise um Anforderungen des Wechselspannungsnetz 10 und/oder des Teilnetzes 22 bezüglich der Verhältnisse der Ströme zwischen den Phasen eingangs- und/oder ausgangsseitig des AC-AC-Umrichters gerecht zu werden.

Im Teilnetz 22 ist weiterhin ein Energiespeicher 15 angeordnet der in geeigneter Form an das Teilnetz 22 angeschlossen ist, erfindungsgemäss über einen bidirektionalen Wechselrichter, und elektrische Leistung aus dem Teilnetz 22 entnehmen und in das Teilnetz 22 einspeisen und damit die Lasten 13, 14 alternativ oder zusätzlich versorgen kann. Dabei ist der Energiespeicher 15 mithilfe des zugehörigen Wechselrichters dazu eingerichtet sei die elektrischen Parameter des Teilnetzes 22 zu bestimmen, d.h. Frequenz und Spannung des Teilnetzes vorzugeben und mithin als Netzbildner für das Teilnetz 22 zu wirken. Erfindungsgemäss folgt der AC-AC-Umrichter 21 hinsichtlich der über seinen Teilnetzanschluss fließenden elektrischen Leistung den netzbildenden Vorgaben des Wechselrichters des Energiespeichers 15.

Im Teilnetz 22 kann weiterhin eine Energieerzeugungsanlage 23, beispielsweise eine Photovoltaikanlage angeordnet sein, die eine elektrische Leistung produziert und in geeigneter Form in das Teilnetz 22 einspeist, insbesondere über einen Wechselrichter und insbesondere zur alternativen oder zusätzlichen Versorgung der Lasten 13, 14. Die Energieerzeugungsanlage 23 kann über eine weitere, insbesondere bidirektionale Kommunikationsverbindung (nicht dargestellt) mit der Steuerungsvorrichtung 16 verbunden sein, wobei über diese Kommunikationsverbindung einerseits Betriebsdaten der Energieerzeugungsanlage 23 an die Steuerungsvorrichtung 16 sowie andererseits Steuerbefehle von der Steuerungsvorrichtung 16 an die Energieerzeugungsanlage 23 übermittelt werden können.

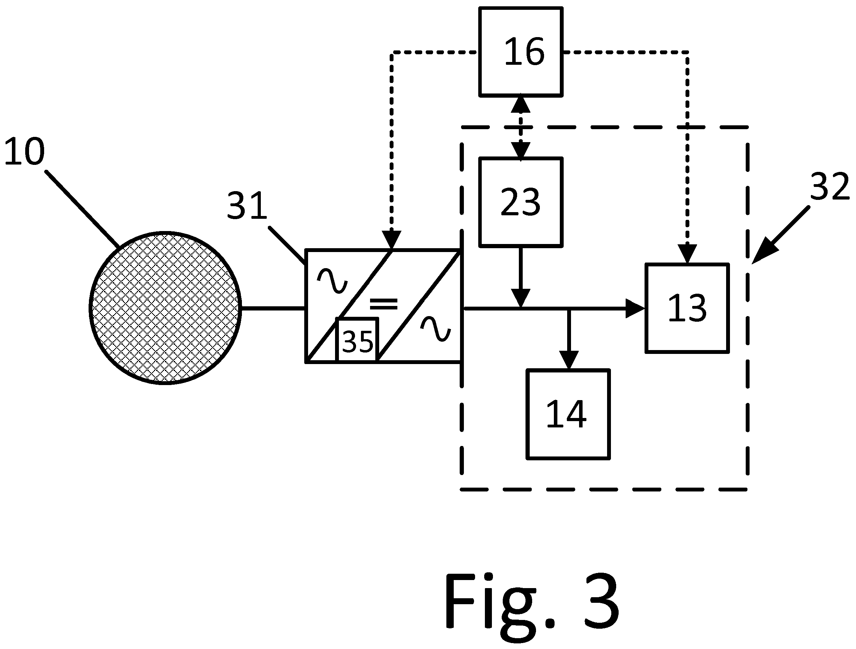

**Fig. 3** zeigt ein Teilnetz 32, das über einen AC-AC-Umrichter 31 als Anschlusspunkt an das Wechselspannungsnetz 10 angeschlossen ist, wobei der AC-AC-Umrichter 31 einen integrierten Energiespeicher 35 aufweist. Der Energiespeicher 35 ist bevorzugt mit einem Gleichspannungs-Zwischenkreis des AC-AC-Umrichters 31 verbunden, insbesondere über einen Gleichspannungswandler, und kann elektrische Leistung aus dem Gleichspannungs-Zwischenkreis entnehmen oder darin einspeisen. Die weiteren Komponenten sind bereits in Zusammenhang mit den Figuren 1 und/oder 2 beschrieben.

Es versteht sich, dass sowohl das Wechselspannungsnetz 10 als auch die Teilnetze 12, 22, 32 jeweils einphasig, zweiphasig (insbesondere als sogenanntes Split-Phase) oder dreiphasig ausgeführt sein können, wobei die in den Teilnetzen 12, 22, 32 angeordneten Komponenten 13, 14, 15, 23 bei einer einphasigen Ausführung des Teilnetzes 12, 22, 32 ebenfalls einphasig und bei einer mehrphasigen Ausführung des Teilnetzes 12, 22, 32 jeweils einphasig oder mehrphasig ausgeführt sein können.

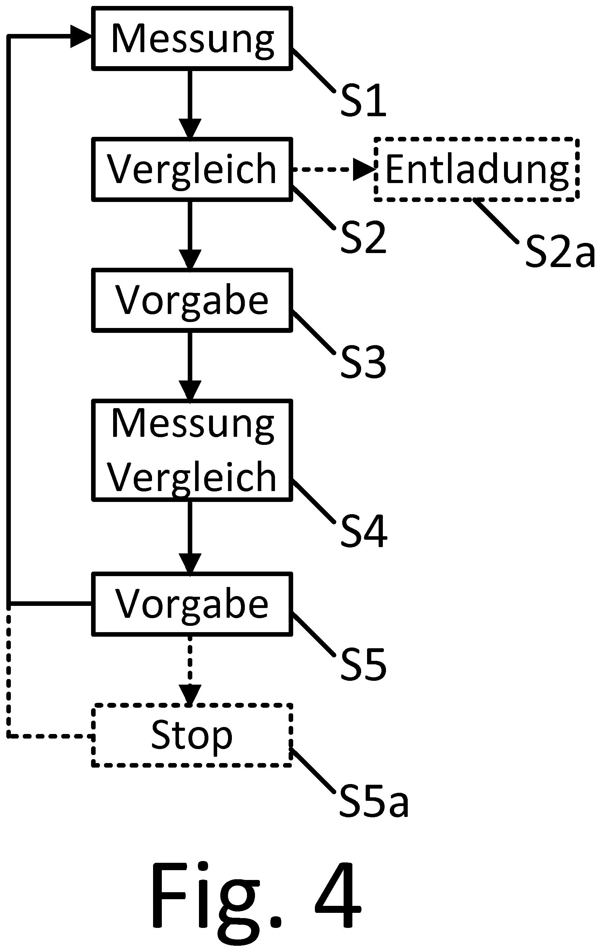

**Fig. 4** zeigt schematisch ein Verfahren zur Regelung einer elektrischen Leistung, die über den Anschlusspunkt 11 bzw. den AC-AC-Umrichter 21 vom Wechselspannungsnetz 10 in das Teilnetz 12, 22, 32 oder aus dem Teilnetz 12, 22, 32 in das Wechselspannungsnetz 10 fließt.

In Schritt S1 wird eine über den Anschlusspunkt 11 bzw. den AC-AC-Umrichter 21, 31 fließende elektrische Leistung gemessen, wobei diese Messung eine ggf. phasenaufgelöste Erfassung der über den Anschlusspunkt 11 bzw. den AC-AC-Umrichter 21, 31 fließenden Ströme umfassen kann.

In Schritt S2 werden die in Schritt S1 gemessenen Werte mit vorgegebenen Grenzwerten verglichen. Dieser Vergleich kann auf eine gemessene Leistung, einen gemessenen Gesamtstrom, gemessene Ströme auf einzelnen Phasen und/oder Differenzen (Schieflast) zwischen Strömen auf einzelnen Phasen bezogen sein.

Im optionalen Schritt S2a kann einem ggf. im Teilnetz 12, 22 und/oder im AC-AC-Umrichter 31 angeordneten Energiespeicher 15, 35 eine Leistungsabgabe vorgegeben werden, insbesondere falls in Schritt S2 eine Überschreitung eines Grenzwertes festgestellt wurde.

In Schritt S3 wird der gemäß einer der Figuren 1 bis 3 mit der Steuerungsvorrichtung 16 verbundenen Last 13 eine maximale Leistungsaufnahme in Abhängigkeit von der Messung gemäß S1 und dem Vergleich gemäß S2 vorgegeben. Diese Vorgabe kann einen Sollwert für eine maximale elektrische Leistung und/oder ggf. phasenaufgelöste Sollwerte für maximal durch die Last 13 zu beziehende Ströme umfassen.

In Schritt S4 werden die in Schritt S1 durchgeführte Messung und der in Schritt S2 durchgeführte Vergleich wiederholt. Abhängig vom Ergebnis des Vergleichs in Schritt S4 wird in Schritt S5 der Sollwert gemäß Schritt S3 ggf. modifiziert; insbesondere wird der Sollwert gemäß Schritt S3 abgesenkt, wenn in Schritt S4 eine Überschreitung eines Grenzwertes festgestellt wurde. Im optionalen Schritt S5a kann die Leistungsaufnahme der Last 13 insbesondere gestoppt werden, z.B. indem der Sollwert auf Null gesetzt wird, wenn in Schritt S4 zum wiederholten Male eine Überschreitung eines Grenzwertes festgestellt wurde und/oder falls festgestellt wird, dass der in Schritt S5 vorgegebene Sollwert eine maximale Leistungsaufnahme der Last bewirken würde, die unterhalb eines Minimalwertes für die Leistungsaufnahme der Last 13 liegt.

Abschließend verzweigt das Verfahren zurück zu Schritt S1 und das Verfahren wird erneut durchlaufen. Falls in einem Durchlauf des Verfahrens, insbesondere in Schritt S3 und/oder in Schritt S5, eine Absenkung eines Sollwertes aufgrund einer Überschreitung eines Grenzwertes stattgefunden hat, kann in einem folgenden Durchlauf des Verfahrens eine weitere Absenkung des Sollwertes stattfinden, wenn die Überschreitung des Grenzwertes weiterhin besteht, oder eine Erhöhung des Sollwertes stattfinden und/oder die etwaige Leistungsabgabe aus dem Energiespeicher 15, 35 gesenkt werden, falls keine Überschreitung des Grenzwertes mehr festgestellt wird.

### Bezugszeichenliste

- 10: Wechselspannungsnetz
- 11: Anschlusspunkt
- 21, 31: AC-AC-Umrichter (Anschlusspunkt)
- 12, 22, 32: Teilnetz
- 13: Last
- 14: Last
- 15, 35: Energiespeicher
- 16: Steuerungsvorrichtung
- 23: Energieerzeugungsanlage
- S1 - S5a: Schritt

## Patentansprüche

1. Vorrichtung zur Verbindung eines dreiphasigen Teilnetzes (22) mit einem übergeordneten dreiphasigen Wechselspannungsnetz (10), wobei das Teilnetz (22) eine Energieerzeugungsanlage (23) und einen Energiespeicher (15) aufweist, wobei die Vorrichtung einen Anschlusspunkt des Teilnetzes (22) an das Wechselspannungsnetz (10) darstellt und zur Übertragung von elektrischer Leistung zwischen dem Wechselspannungsnetz (10) und dem Teilnetz (22) eingerichtet ist und einen AC-AC-Umrichter (21) umfasst, der einen Netzanschluss zum dreiphasigen Anschluss an das Wechselspannungsnetz (10), zwei Wechselrichter-Brückenschaltungen mit einem dazwischengeschalteten Zwischenkreis und einen Teilnetzanschluss zum dreiphasigen Anschluss an das Teilnetz (22) aufweist und Messvorrichtungen zur Messung der über die einzelnen Phasen des Anschlusspunktes fließenden elektrischen Leistungen umfasst,
**dadurch gekennzeichnet, dass**
die Vorrichtung eine Steuerungsvorrichtung (16) umfasst, die dazu eingerichtet ist, mittels geeigneter Ansteuerung der Wechselrichter-Brückenschaltungen des AC-AC-Umrichters (21) die über die einzelnen Phasen des Teilnetzanschlusses (21) fließenden elektrischen Leistungen in Abhängigkeit von Leistungswerten des Energiespeichers (15) einzustellen, wobei der Energiespeicher (15) über einen bidirektionalen Wechselrichter an das Teilnetz (22) angeschlossen ist und mithilfe des Wechselrichters dazu eingerichtet ist, als Netzbildner für das Teilnetz (22) zu wirken, und wobei der AC-AC-Umrichter (21) dazu eingerichtet ist, hinsichtlich der über den Teilnetzanschluss (22) fließenden elektrischen Leistung den netzbildenden Vorgaben des Wechselrichters des Energiespeichers (15) zu folgen.

2. Vorrichtung gemäß Anspruch 1, **dadurch gekennzeichnet, dass** die Steuerungsvorrichtung (16) kommunikativ mit der Energieerzeugungsanlage (23) und/oder dem Energiespeicher (15) verbindbar und dazu eingerichtet ist, die Leistungswerte der Energieerzeugungsanlage (23) und/oder des Energiespeichers (15) kommunikativ zu empfangen.

3. Vorrichtung gemäß Anspruch 1 oder 2, **dadurch gekennzeichnet, dass** die Steuerungsvorrichtung (16) weiterhin kommunikativ mit einer Netzleitstelle verbindbar und dazu eingerichtet ist, mittels geeigneter Ansteuerung der Wechselrichter-Brückenschaltungen des AC-AC-Umrichters (21) die über die einzelnen Phasen des Netzanschlusses des AC-AC-Umrichters (21) fließenden elektrischen Leistungen in Abhängigkeit von kommunikativ übermittelten Vorgabewerten der Netzleitstelle einzustellen.

4. Verfahren zum Betrieb eines dreiphasigen Teilnetzes (22), das eine Energieerzeugungsanlage (23) und einen Energiespeicher (15) umfasst und über einen AC-AC-Umrichter (21) mit einem übergeordneten dreiphasigen Wechselspannungsnetz (10) verbunden ist, wobei der AC-AC-Umrichter (21) dreiphasig an das Wechselspannungsnetz (10) und dreiphasig an das Teilnetz (22) angeschlossen ist und zur Übertragung elektrischer Leistung zwischen dem Wechselspannungsnetz (10) und dem Teilnetz (22) eingerichtet ist und einen Netzanschluss, zwei Wechselrichter-Brückenschaltungen mit einem dazwischengeschalteten Zwischenkreis und einen Teilnetzanschluss aufweist, wobei der AC-AC-Umrichter (21) die über die einzelnen Phasen des Anschlusspunktes fließenden Ströme misst,
**dadurch gekennzeichnet, dass**
die Wechselrichter-Brückenschaltungen des AC-AC-Umrichters (21) derart angesteuert werden, dass die über die einzelnen Phasen des Teilnetzanschlusses des AC-AC-Umrichters (21, 31) fließenden elektrischen Leistungen in Abhängigkeit von Leistungswerten der Energieerzeugungsanlage (23) und/oder des Energiespeichers (15) eingestellt werden, wobei der Energiespeicher (15) über einen bidirektionalen Wechselrichter an das Teilnetz (22) angeschlossen ist und mithilfe des Wechselrichters als Netzbildner für das Teilnetz (22) wirkt, und wobei der AC-AC-Umrichter (21) hinsichtlich der über den Teilnetzanschluss (22) fließenden elektrischen Leistung den netzbildenden Vorgaben des Wechselrichters des Energiespeichers (15) folgt.

5. Verfahren gemäß Anspruch 4, **dadurch gekennzeichnet, dass** die Wechselrichter-Brückenschaltungen des AC-AC-Umrichters (21) derart angesteuert werden, dass die über die einzelnen Phasen des Netzanschlusses des AC-AC-Umrichters (21) fließenden elektrischen Leistungen derart eingestellt werden, dass eine maximale Differenz zwischen den über die einzelnen Phasen des Netzanschlusses des AC-AC-Umrichters (21) fließenden elektrischen Leistungen unterhalb eines vorgebbaren Schieflastgrenzwertes liegt und insbesondere kleiner als eine maximale Differenz zwischen über die einzelnen Phasen des Teilnetzanschlusses des AC-AC-Umrichters (21) fließenden elektrischen Leistungen und/oder minimal nahe null ist.

6. Verfahren gemäß Anspruch 4 oder 5, **dadurch gekennzeichnet, dass** der Energiespeicher (15) über den bidirektionalen Wechselrichter eine Wechselspannung mit vorgegebener Frequenz und Amplitude zum Betrieb von im Teilnetz (22) angeordneten Lasten (13, 14) bereitstellt, wobei die über den Teilnetzanschlusses des AC-AC-Umrichters (21) fließende elektrische Leistung in Abhängigkeit einer Abweichung der Frequenz im Teilnetz (22) von einer vorgegebenen Referenzfrequenz eingestellt wird.

## Claims

1. A device for connecting a three-phase subnetwork (22) to a superordinate three-phase alternating voltage grid (10), wherein the subnetwork (22) comprises an energy production installation (23) and an energy store (15), and wherein the device constitutes a connection point of the subnetwork (22) to the alternating voltage grid (10) and is configured to transmit electrical power between the alternating voltage grid (10) and the subnetwork (22), and comprises an AC-AC converter (21) having a network connection for three-phase connection to the alternating voltage grid (10), two inverter bridge circuits with an interposed intermediate circuit, and a subnetwork connection for three-phase connection to the subnetwork (22), and includes measuring devices for measuring the electrical power flowing through the individual phases of the connection point,
**characterized in that**
the device comprises a control device (16) which is configured to set, by means of suitable control of the inverter bridge circuits of the AC-AC converter (21), the electrical power flowing via the individual phases of the subnetwork connection (21) on the basis of power values of the energy store (15), wherein the energy store (15) is connected to the subnetwork (22) via a bidirectional inverter and, with the aid of the inverter, is configured to act as a network former for the subnetwork (22), and wherein the AC-AC converter (21) is configured to follow the network-forming specifications of the inverter of the energy store (15) with regard to the electrical power flowing via its subnetwork connection (22).

2. The device as claimed in claim 1, **characterized in that** the control device (16) is communicatively connectable to the energy production installation (23) and/or the energy store (15) and is configured to communicatively receive the power values of the energy production installation (23) and/or of the energy store (15).

3. The device as claimed in claim 1 or 2, **characterized in that** the control device (16) is communicatively connectable to a network control center and is configured to set the electrical powers flowing via the individual phases of the network connection of the AC/AC converter (21) on the basis of communicatively transmitted preset values from the network control center by suitably controlling the inverter bridge circuits of the AC/AC converter (21).

4. A method for operating a multiphase subnetwork (22) that comprises an energy production installation (23) and an energy store (15) and is connected to a superordinate multiphase alternating voltage network (10) via an AC-AC converter (21), wherein the AC-AC converter (21) is connected via three phases to the alternating voltage network (10) and to the subnetwork (22), is configured to transmit electrical power between the alternating voltage network (10) and the subnetwork (22), and comprises a grid connection, two inverter bridge circuits with an interposed intermediate circuit, and a subnetwork connection, wherein the AC-AC converter (21) measures the currents flowing through the individual phases of the connection point,
**characterized in that**
the inverter bridge circuits of the AC-AC converter (21) are controlled such that the electrical power flowing through the individual phases of the sub-grid connection of the AC-AC converter (21, 31) are set on the basis of power values of the energy production installation (23) and/or of the energy store (15), wherein the energy store (15) is connected to the subnetwork (22) via a bidirectional inverter and, with the aid of the inverter, acts as a network former for the subnetwork (22), and wherein the AC-AC converter (21) follows the network-forming specifications of the inverter of the energy store (15) with regard to the electrical power flowing via its subnetwork connection.

5. The method as claimed in claim 4, **characterized in that** the inverter bridge circuits of the AC/AC converter (21) are controlled in such a manner that the electrical powers flowing via the individual phases of the network connection of the AC/AC converter (21) are set in such a manner that a maximum difference between the electrical powers flowing via the individual phases of the network connection of the AC/AC converter (21) is below a predefinable unbalanced load limit value and, in particular, is less than a maximum difference between electrical powers flowing via the individual phases of the subnetwork connection of the AC/AC converter (21) and/or is at least close to zero.

6. The method as claimed in claim 4 or 5, **characterized in that** the energy store (15) is connected to the subnetwork (22) via a bidirectional inverter and provides an alternating voltage having a predefined frequency and amplitude for the purpose of operating loads (13, 14) arranged in the subnetwork (22), wherein the electrical power flowing via the subnetwork connection of the AC/AC converter (21) is set on the basis of a deviation of the frequency in the subnetwork (22) from a predefined reference frequency.

## Revendications

1. Dispositif destiné à raccorder un sous-réseau triphasé (22) à un réseau triphasé à courant alternatif de niveau supérieur (10), le sous-réseau (22) comportant une installation de production d'énergie (23) et un dispositif de stockage d'énergie (15), le dispositif constituant un point de raccordement du sous-réseau (22) au réseau à tension alternative (10) et est agencé pour le transfert de puissance électrique entre le réseau à tension alternative (10) et le sous-réseau (22), et comprend un convertisseur CA-CA (21) qui comporte un raccordement au réseau pour le raccordement triphasé au réseau à tension alternative (10), deux circuits en pont d'onduleurs avec un circuit intermédiaire intercalé entre eux, ainsi qu'un raccordement au sous-réseau pour un raccordement triphasé au sous-réseau (22), et comprend des dispositifs de mesure destinés à mesurer les puissances électriques circulant sur les différentes phases du point de raccordement,
**caractérisé en ce que**
le dispositif comprend un dispositif de commande (16) qui est agencé pour régler, au moyen d'une commande appropriée des circuits en pont des onduleurs du convertisseur CA-CA (21), les puissances électriques circulant sur les différentes phases du raccordement au sous-réseau (21) en fonction des valeurs de puissance de l'accumulateur d'énergie (15), l'accumulateur d'énergie (15) est raccordé au sous-réseau (22) via un onduleur bidirectionnel et est agencé, à l'aide de cet onduleur, pour agir en tant que générateur de réseau pour le sous-réseau (22), et dans lequel le convertisseur CA-CA (21) est conçu pour suivre, en ce qui concerne la puissance électrique circulant via le raccordement au sous-réseau (22), les consignes de formation du réseau fournies par l'onduleur du accumulateur d'énergie (15).

2. Dispositif selon la revendication 1, **caractérisé en ce que** le dispositif de commande (16) peut être connecté de manière communicative à l'installation de production d'énergie (23) et/ou au l'accumulateur d'énergie (15) et est conçu pour recevoir par communication les valeurs de puissance de l'installation de production d'énergie (23) et/ou du accumulateur d'énergie (15).

3. Dispositif selon la revendication 1 ou 2, **caractérisé en ce que** le dispositif de commande (16) peut en outre être connecté à un centre de contrôle du réseau et est conçu pour régler, au moyen d'une commande appropriée des circuits en pont des onduleurs du convertisseur CA-CA (21), les puissances électriques circulant sur les différentes phases du raccordement au réseau du convertisseur CA-CA (21) en fonction de valeurs de consigne transmises par communication par le centre de contrôle du réseau.

4. Procédé d'exploitation d'un sous-réseau triphasé (22) qui comprend une installation de production d'énergie (23) et un accumulateur d'énergie (15) et qui est relié, par l'intermédiaire d'un convertisseur CA-CA (21), à un réseau triphasé de tension alternative de niveau supérieur (10) par l'intermédiaire d'un convertisseur CA-CA (21), le convertisseur CA-CA (21) étant raccordé de manière triphasée au réseau à tension alternative (10) et de manière triphasée au sous-réseau (22), et étant conçu pour le transfert de puissance électrique entre le réseau à tension alternative (10) et le sous-réseau (22), et comportant un raccordement au réseau, deux circuits en pont d'onduleurs avec un circuit intermédiaire intercalé, et une connexion au sous-réseau, le convertisseur CA-CA (21) mesurant les courants circulant par les différentes phases du point de raccordement,
**caractérisé en ce que**
les circuits en pont d'onduleurs du convertisseur CA-CA (21) sont commandés de telle sorte que les puissances électriques circulant par les différentes phases du raccordement au sous-réseau du convertisseur CA-CA (21, 31) sont ajustées en fonction des valeurs de puissance de l'installation de production d'énergie (23) et/ou du accumulateur d'énergie (15), l'accumulateur d'énergie (15) est raccordé au sous-réseau (22) via un onduleur bidirectionnel et agit, à l'aide de cet onduleur, en tant que générateur de réseau pour le sous-réseau (22), et dans lequel le convertisseur CA-CA (21) suit, en ce qui concerne la puissance électrique circulant via le raccordement au sous-réseau (22), les spécifications de formation de réseau fournies par l'onduleur du accumulateur d'énergie (15).

5. Procédé selon la revendication 4, **caractérisé en ce que** les circuits en pont de l'onduleur du convertisseur CA-CA (21) sont commandés de telle sorte que les puissances électriques circulant par les différentes phases du raccordement au réseau du convertisseur CA-CA (21) soient réglées de manière à ce qu'une différence maximale entre les puissances électriques circulant par les différentes phases du raccordement au réseau du convertisseur CA-CA (21) se situe en dessous d'une valeur limite de charge asymétrique prédéfinissable et, en particulier, soit inférieure à une différence maximale entre les puissances électriques circulant par les différentes phases du raccordement au sous-réseau du convertisseur CA-CA (21) et/ou soit au plus proche de zéro.

6. Procédé selon la revendication 4 ou 5, **caractérisé en ce que** l'accumulateur d'énergie (15) fournit, via l'onduleur bidirectionnel, une tension alternative de fréquence et d'amplitude prédéfinies pour l'alimentation des charges (13, 14) disposées dans le sous-réseau (22) , la puissance électrique circulant via le raccordement au sous-réseau du convertisseur CA-CA (21) étant réglée en fonction d'un écart entre la fréquence dans le sous-réseau (22) et une fréquence de référence prédéfinie.
